# EUROPÄISCHE PATENTSCHRIFT

(11) **EP 0 611 347 B1**
(45) Veröffentlichungstag und Bekanntmachung des Hinweises auf die Patenterteilung: **14.02.1996**
(21) Anmeldenummer: 92922933.4
(22) Anmeldetag: 10.11.1992
(51) Int. Cl.: B60S 1/34

(54) **WISCHARM, INSBESONDERE ZUR REINIGUNG EINER SCHEIBE EINES KRAFTFAHRZEUGS**
WIPER ARM, IN PARTICULAR FOR CLEANING THE WINDOW OF A MOTOR VEHICLE
BALAI D'ESSUIE-GLACE DESTINE NOTAMMENT A NETTOYER UNE VITRE D'UN VEHICULE AUTOMOBILE

(30) Priorität: 11.11.1991 DE 4136938
(43) Veröffentlichungstag der Anmeldung: 24.08.1994
(73) Patentinhaber: ITT Automotive Europe GmbH, D-60488 Frankfurt am Main (DE)
(72) Erfinder: EGNER-WALTER, Bruno, D-7100 Heilbronn (DE); SCHMID, Eckhardt, D-7129 Brackenheim (DE)
(74) Vertreter: Portwich, Peter
(86) Internationale Anmeldenummer: EP9202574
(87) Internationale Veröffentlichungsnummer: WO9309980

(56) Entgegenhaltungen:
- DE-A- 3 829 466
- FR-A- 2 124 865
- FR-A- 2 636 902
- GB-A- 2 117 630

## Beschreibung

Die Erfindung betrifft einen Wischarm, der insbesondere zur Reinigung einer Scheibe eines Kraftfahrzeuges verwendet wird und der die Merkmale aus dem Oberbegriff des Anspruchs 1 aufweist

Ein derartiger Wischarm ist bereits aus der DE-A-38 29 466 bekannt. Bei diesem Wischarm ist das Befestigungsteil als Druckgußteil hergestellt. Ein Federeinhängestift ist zwischen den Seitenwangen des Befestigungsteils angeordnet. An dem Befestigungsteil sind spezielle Aufnahmebereiche ausgeformt, die sich von den Seitenwangen und vom Rücken her nach innen erstrecken und den Stift in sich aufnehmen. Der Stift ist entweder von außen in eine lediglich nur eine Seitenwange durchörternde Bohrung eingepreßt oder er ist von unten zwischen den Seitenwangen in einen offenen Schlitz der speziellen Aufnahmebereiche eingesetzt und durch Materialverformung der Aufnahmebereiche in diesen fixiert. Eine solche Befestigung des Stiftes zum Einhängen der Anpreßdruckfeder ist bei einem Wischarm mit aus Blech ausgestanzten Seitenwangen des Befestigungsteils nicht verwendbar.

Die FR-A-2 636 902 zeigt einen Stift, der zum Einhängen der Anpreßdruckfeder eine mittige Einhängeöse trägt. Hinweise über die Beschaffenheit des Befestigungsteils und auf die Art der Befestigung des Stiftes sind dieser Druckschrift nicht entnehmbar.

Aufgabe der Erfindung ist es, einen Wischarm mit den Merkmalen aus dem Oberbegriff des Anspruchs 1 so weiterzuentwickeln, daß eine einfache aber sichere Befestigung des Stiftes zum Einhängen der Anpreßdruckfeder an den aus Blech ausgestanzten Seitenwangen des Befestigungsteils gewährleistet ist.

Diese Aufgabe wird bei einem Wischarm mit den Merkmalen des Oberbegriffs des Anspruchs 1 erfindungsgemäß dadurch gelost, daß der Stift zum Einhängen der Anpreßdruckfeder in Löchern der aus Blech ausgestanzten Seitenwangen des Befestigungsteils gehalten und dabei zur axialen Sicherung nahe der Innenseite einer Seitenwange verformt bzw. durch an den Außenseiten der Seitenwangen anliegende Nietköpfe axial gesichert ist. Gemäß einer anderen erfindungsgemäßen Variante ist der Stift zumindest zu seinen Stirnseiten hin hohl. Er ist zwischen den Innenseiten der aus Blech ausgestanzten Seitenwangen angeordnet, und die Seitenwangen weisen stirnseitig in den Stift hineinragende Einprägungen auf.

Beide Varianten eines erfindungsgemäßen Wischarms bzw. dessen Befestigungsteils sind einfach herstellbar und gewährleisten eine sichere Befestigung des Stiftes an den Seitenwangen. Somit ist ein Wischarm entwickelt worden, bei dem das Befestigungsteil zumindest teilweise als kostengünstiges Stanz-Biege-Formteil aus Blech herstellbar ist und der alle erforderlichen Funktionen sicher erfüllt.

Vorteilhafte Ausgestaltungen des erfindungsgemäßen Wischarms kann man den Unteransprüchen entnehmen.

So sind in einer bevorzugten Ausführung gemäß Anspruch 2 die Löcher in den Seitenwangen mit sogenannten Durchzügen versehen, die insbesondere nach innen gerichtet sind. Durch diese Maßnahme werden die Lagerflächen für den Stift in den Seitenwangen vergrößert, und es können wesentlich größere Kräfte über einen langen Zeitraum von dem Stift aufgenommen werden, ohne daß die Lagerstellen in den Seitenwangen verschleißen.

Befestigungsteile aus Druckguß besitzen sehr oft mittig einen schmalen Schlitz, der von einem Stift durchquert wird, an dem die Anpreßdruckfeder eingehängt ist. Der schmale Schlitz fixiert dabei die Einhängestelle in axialer Richtung des Stiftes. Bei einem Befestigungsteil aus Blech mit einem Stift, der sich zwischen den beiden Seitenwangen erstreckt, kann man die Einhängestelle der Anpreßdruckfeder gemäß Anspruch 3 auf vorteilhafte Weise dadurch fixieren, daß der Stift wenigstens eine umlaufende Rille aufweist. Aus dieser Rille kann sich das hakenförmige Ende der Anpreßdruckfeder oder eines Zwischenbügels zwischen der Anpreßdruckfeder und dem Stift nicht entfernen.

Mehrere Ausführungsbeispiele eines erfindungsgemäßen Wischarms bzw. des Befestigungsteils eines erfindungsgemäßen Wischarms sind in den Zeichnungen dargestellt. Anhand der Fig. dieser Zeichnungen wird die Erfindung nun näher erläutert.

Es zeigen:
- Fig. 1: ein erstes Ausführungsbeispiel als ganzen Wischarm teilweise im Schnitt, teilweise in Seitenansicht,
- Fig. 2: teilweise im Schnitt, teilweise in Ansicht von unten, eine Ausführung mit einem vollen Stift zur Einhängung einer Anpreßdruckfeder,
- Fig. 3: in Ansicht von unten eine Ausführung mit 3 Rillen in einem Stift zur Einhängung der Anpreßdruckfeder,
- Fig. 4: teilweise im Schnitt, teilweise in Ansicht von unten, eine dritte Ausführung mit einem durchgehenden, hohlen Stift zur Einhängung einer Anpreßdruckfeder.

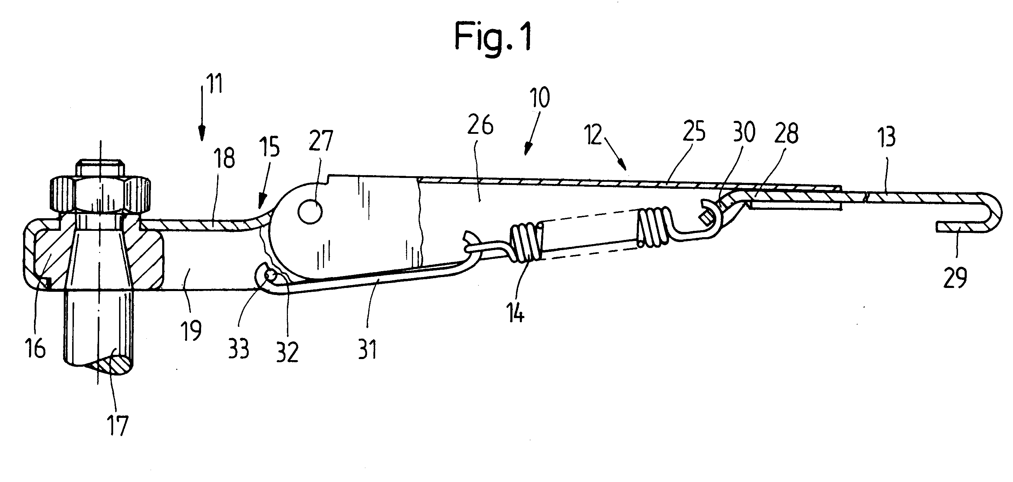

Der in Fig. 1 gezeigte Wischarm 10 umfaßt als wesentliche Teile ein Befestigungsteil 11, ein Gelenkteil 12, eine Wischstange 13 und eine Anpreßdruckfeder 14. Das Befestigungsteil 11 ist im wesentlichen zweiteilig ausgeführt, mit einem Blechstück 15 und einem Gußteil 16, das in dem Blechstück 15 gehalten ist und mit dem das Befestigungsteil 11 auf einer Wischerwelle 17 befestigt ist. Das Blechstück 15 ist aus einem Blechband ausgestanzt und durch Ziehen und Biegen des Bleches in eine im Querschnitt etwa U-artige Form mit einem Rücken 18 und zwei vom Rücken auf die zu reinigende Scheibe weisende Seitenwangen 19 gebracht. Nach dem üblichen Sprachgebrauch befindet sich der Rücken 19 also oben. Die Seitenwangen 19 sind hinter der Wischerwelle 17 um das Gußteil 16 herumgeführt und gehen dort ineinander über.

Das Gelenkteil 12 ist ebenfalls aus einem Blech gefertigt und in eine U-Form mit einem Rücken 25 und zwei Seitenwangen 26 gebracht. Die Seitenwangen 26 umgreifen das Befestigungsteil 11 außen und besitzen Bohrungen, die mit Bohrungen in den Seitenwangen 19 des Befestigungsteils 11 fluchten und durch die ein Gelenkbolzen 27 gesteckt ist. Über diesen Gelenkbolzen 27 und die genannten Bohrungen ist das Gelenkteil 12 schwenkbar am Befestigungsteil 11 gelagert.

Die Wischstange 13 ragt mit einem Ende 28 in das Gelenkteil 12 hinein und ist am anderen Ende zu einem Haken 29 gebogen, um ein Wischblatt am Wischarm 10 befestigen zu können. Am vorderen Ende des Gelenkteils 12 wird die Wischstange 13 vom Gelenkteil 12 umfaßt und dadurch fest am Gelenkteil gehalten.

Die Anpreßdruckfeder 14 ist in einen Durchbruch 30, der sich am Ende 28 der Wischstange 13 innerhalb des Gelenkteils 12 befindet, und über einen Bügel 31 an einem in das Befestigungsteil 11 eingesetzten Stift 32 eingehängt. In der Betriebsstellung besteht zwischen der Wirkungslinie der Anpreßdruckfeder 14 und der Achse des Gelenkbolzens 27 ein Abstand, so daß die Anpreßdruckfeder also versucht, Gelenkteil 12 und Wischstange 13 einerseits und Befestigungsteil 11 andererseits gegeneinander zu verschwenken, und dadurch den Druck erzeugt, mit dem das nicht dargestellte Wischblatt auf einer zu reinigenden Scheibe aufliegt.

Zur Befestigung des Stiftes 32 am Befestigungsteil 11 weisen dessen Seitenwangen 19 zwei miteinander fluchtende Bohrungen 33 auf, in die der Stift 32 eingepreßt ist.

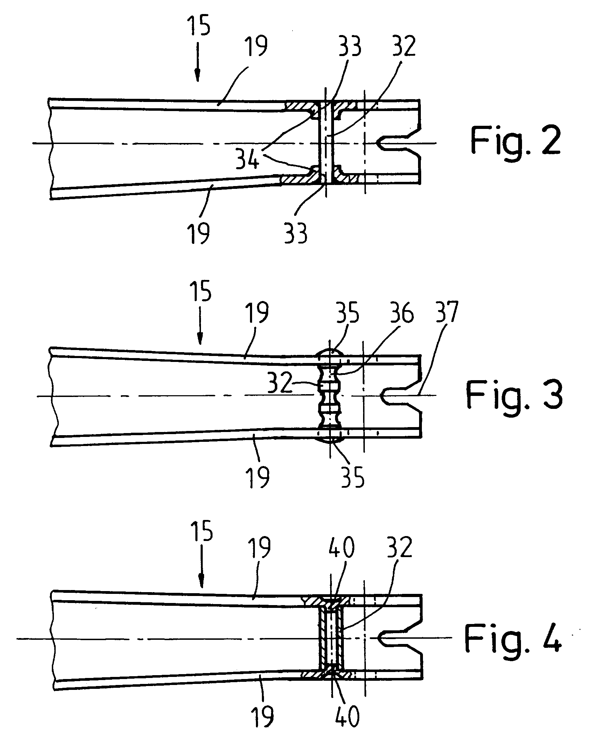

Bei der Ausführung nach Fig. 2 sind die Bohrungen 33 in den Seitenwangen 19 des Blechstückes 15 zur besseren Halterung des Stiftes 32 mit Durchzügen 34 versehen, die nach innen ragen. Zur axialen Sicherung ist der Stift an der Stirnseite der Durchzüge 34 verformt. Sind keine Durchzüge vorhanden, so ist der Stift 32 unmittelbar innen an den Seitenwangen 19 verformt.

Bei der Ausführung nach Fig. 3 ist in Bohrungen 33 der Seitenwangen 19 des Blechteils 15 ein Stift 32 eingesetzt, der durch an den Außenseiten der Seitenwangen 19 anliegende Nietköpfe 35 axial gesichert ist. Der Stift 32 weist drei umlaufende Rillen 36 auf, von denen sich eine in der Mitte zwischen den beiden Seitenwangen 19 befindet. Die beiden anderen Rillen befinden sich jeweils zwischen der mittleren Rille und einer Seitenwange 19 und sind gleich weit von der mittleren Rille und gleich weit von der jeweiligen Seitenwange entfernt. Eine in eine Rille 36 des Stiftes 32 eingehängte Anpreßdruckfeder ist in axialer Richtung gesichert, kann also auf dem Stift nicht hin- und herrutschen. Die gewählte Anordnung der Rillen 36 erlaubt es, eine einzige Anpreßdruckfeder, zwei Anpreßdruckfedern oder drei Anpreßdruckfedern symmetrisch zu einer in der Mitte zwischen den beiden Seitenwangen 19 verlaufenden Mittelebene 37 einzuhängen.

Bei der Ausführung nach Fig. 4 wird der Stift 32 von einer durchgehend hohlen Hülse gebildet, die durch Einprägungen 40 der Seitenwangen 19, die stirnseitig in die Hülse 32 hineinragen, gehalten wird.

## Patentansprüche

1. Wischarm (10), insbesondere zur Reinigung einer Scheibe eines Kraftfahrzeuges, mit einem Befestigungsteil (11) zur Befestigung auf einer Wischerwelle (17), wobei das Befestigungsteil (11) eine im Querschnitt im wesentlichen U-artige Form mit einem Rücken (18) und zwei vom Rücken (18) zur Scheibe weisenden Seitenwangen (19) aufweist, mit einem Gelenkteil (12), das am Befestigungsteil (11) schwenkbar gelagert ist, und mit einer Anpreßdruckfeder (14), die einerseits am Gelenkteil (12) oder einer am Gelenkteil (12) befestigten Wischstange (13) und andererseits an einem sich zwischen den Seitenwangen (19) des Befestigungsteils (11) erstreckenden Stift (32) eingehängt ist, **dadurch gekennzeichnet,** daß der Stift (32) entweder in Löchern (33) der aus Blech ausgestanzten Seitenwangen (19) gehalten ist und dabei zur axialen Sicherung der Stift (32) nahe der Innenseite einer Seitenwange (19) verformt (Figur 2) bzw. durch an den Außenseiten der Seitenwangen (19) anliegende Nietköpfe (35) axial gesichert (Figur 3) ist oder der Stift (32) zumindest zu seinen Stirnseiten hin hohl ist und dabei die Seitenwangen (19) stirnseitig in den Stift (32) hineinragende Einprägungen (40) aufweisen (Figur 4).

2. Wischarm nach Anspruch 1, **dadurch gekennzeichnet,** daß die Löcher (33) mit, insbesondere nach innen gerichteten, Durchzügen (34) versehen sind.

3. Wischarm nach Anspruch 1 oder 2, **dadurch gekennzeichnet,** daß der Stift (32) wenigstens eine umlaufende Rille (36) zur Fixierung der Einhängestelle der Anpreßdruckfeder (14) in axialer Richtung des Stiftes (32) aufweist.

## Claims

1. A wiper arm (10), in particular for cleaning a windscreen of an automotive vehicle, including a fastening part (11) for fastening it on a wiper shaft (17), the fastening part (11) having a substantially U-shaped configuration in cross-section, including a back (18) and two side walls (19) pointing from the back (18) to the windscreen, a joint part (12) which is pivotably mounted on the fastening part (11), and a pressure spring (14) which is hinged on the joint part (12) or a wiper rod (13) fastened to the joint part (12), on the one hand, and on a pin (32) extending between the side walls (19) of the fastening part (11), on the other hand,
**characterized** in that the pin (32) is retained in holes (33) in the punched out sheet-metal side walls (19) and, for the axial securement, the pin (32) is deformed close to the inner side of a side wall (19) (Figure 2) or is axially secured in position by rivet heads (35) which abut on the outer sides of the side walls (19) (Figure 3), or the pin (32) is hollow at least towards its frontal ends and, in this configuration, the side walls (19) have indentations (40) projecting frontally into the pin (32) (Figure 4).

2. A wiper arm as claimed in claim 1,
**characterized** in that the holes (33) are furnished with rim portions (34) which are directed inwardly, in particular.

3. A wiper arm as claimed in claim 1 or claim 2,
**characterized** in that the pin (32) is provided with at least one circumferential groove (36) for the fixation of the hinge point of the pressure spring (14) in the axial direction of the pin (32).

## Revendications

1. Bras d'essuie-glace (10), destiné notamment à nettoyer une vitre d'un véhicule automobile, avec une partie de fixation (11) pour la fixation sur un arbre d'essuie-glace (17), la partie de fixation (11) présentant une forme de section sensiblement en U avec un dos (18) et deux joues latérales (19) dirigées du dos (18) vers la vitre, avec une partie articulée (12) qui est montée à pivotement sur la partie de fixation (11), et avec un ressort de pression d'application (14), qui est accroché d'une part à la partie articulée (12) ou à une tige d'essuie-glace (13) fixée à la partie articulée (12) et d'autre part à une goupille (32) s'étendant entre les joues latérales (19) de la partie de fixation (11), caractérisé en ce que, soit la goupille (32) est maintenue dans des trous (33) des joues latérales (19) découpées dans de la tôle, la goupille (32) étant alors, en vue de son assujettissement axial, déformée à proximité de la face intérieure d'une joue latérale (19) (figure 2), ou bien la goupille (32) étant alors assujettie axialement par des têtes de rivet (35) appliquées contre les faces extérieures des joues latérales (19) (figure 3), soit la goupille (32) est creuse au moins vers ses faces frontales, les joues latérales (19) présentant alors des formations intérieurement saillantes (40) qui pénètrent frontalement dans la goupille (32) (figure 4).

2. Bras d'essuie-glace selon la revendication 1, caractérisé en ce que les trous (33) sont pourvus de passages (34), notamment dirigés vers l'intérieur.

3. Bras d'essuie-glace selon la revendication 1 ou 2, caractérisé en ce que la goupille (32) présente au moins une gorge entourante (36) pour fixer la position du point d'accrochage du ressort de pression d'application (14) dans la direction axiale de la goupille (32).
